# EUROPEAN PATENT APPLICATION

(11) **EP 4 518 407 A1**
(43) Date of publication of application: **05.03.2025**
(21) Application number: 22938833.5
(22) Date of filing: 24.04.2022
(51) Int. Cl.: H04W 24/08, H04W 76/30

(54) **WLAN SENSING MEASUREMENT SETUP TERMINATION METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Hersina, Günter
(86) International application number: PCT/CN2022/088853
(87) International publication number: WO 2023/205974

(57) **Abstract**

The embodiments of the present disclosure relate to the technical field of mobile communication. Provided are a WLAN sensing measurement setup termination method and apparatus, and an electronic device and a storage medium. The WLAN sensing measurement setup termination method comprises: determining a sensing measurement setup termination frame, wherein the sensing measurement setup termination frame comprises a first identification bit and/or a second identification bit, the first identification bit indicates a termination range of a sensing measurement process, the termination of which is requested by a sensing initiator, and the second identification bit indicates a trigger type of the sensing measurement process, the termination of which is requested by the sensing initiator; and sending the sensing measurement setup termination frame. Provided in the embodiments of the present disclosure is a format of a termination message frame during a sensing measurement setup process.

## Description

### TECHNICAL FIELD

Embodiments of the present disclosure relate to the field of mobile communication technologies. In particular, the embodiments of the present disclosure relate to a method and a device for terminating WLAN sensing measurement setup, an electronic device, and a storage medium.

### BACKGROUND

With the rapid development of mobile communication technologies, wireless fidelity (Wi-Fi) technology has achieved tremendous advancements in aspects such as transmission rate and throughput. At present, research content of Wi-Fi technology includes 320Mhz bandwidth transmission, aggregation and coordination of multiple frequency bands, etc., the main application scenarios of which include video transmission, augmented reality (AR), virtual reality (VR), etc.

Specifically, the aggregation and coordination of multiple frequency bands refers to communication between devices on 2.4GHz, 5.8GHz, 6GHz and other frequency bands at the same time. For a scenario where devices communicate on multiple frequency bands at the same time, a new media access control (MAC) mechanism needs to be defined for management. In addition, the aggregation and coordination of multiple frequency bands are expected to support low-latency transmission.

In the Wi-Fi technology currently under research, wireless local area network (WLAN) sensing technology may be supported, for example, application scenarios such as location discovery, proximity detection, and presence detection in dense environments (such as a home environment and a corporate environment). During a WLAN sensing measurement termination process, a sensing measurement setup process can be terminated, and a sensing initiator and a sensing responder may exchange a termination message frame to perform termination. Therefore, a format of the termination message frame in the sensing measurement setup process needs to be provided, to achieve the termination of the sensing measurement setup process.

### SUMMARY

The embodiments of the present disclosure provide a method and a device for terminating WLAN sensing measurement setup, an electronic device, and a storage medium, to provide a format of a termination message frame in a sensing measurement setup process.

In an aspect, embodiments of the present disclosure provide a method for terminating WLAN sensing measurement setup, which is performed by a sensing initiator, and the method includes:
determining a sensing measurement setup termination frame, in which the sensing measurement setup termination frame includes a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
transmitting the sensing measurement setup termination frame.

In another aspect, embodiments of the present disclosure further provide a method for terminating WLAN sensing measurement setup, which is performed by a sensing responder, and the method includes:
receiving a sensing measurement setup termination frame, in which the sensing measurement setup termination frame includes a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
terminating the sensing measurement process based on the sensing measurement setup termination frame.

In another aspect, embodiments of the present disclosure further provide an electronic device, the electronic device is a sensing initiator, and the electronic device includes:
a determination module, configured to determine a sensing measurement setup termination frame, in which the sensing measurement setup termination frame includes a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
a transmission module, configured to transmit the sensing measurement setup termination frame.

In another aspect, embodiments of the present disclosure further provide an electronic device, the electronic device is a sensing responder, and the electronic device includes:
a reception module, configured to receive a sensing measurement setup termination frame, in which the sensing measurement setup termination frame includes a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
a termination module, configured to terminate the sensing measurement process based on the sensing measurement setup termination frame.

In another aspect, embodiments of the present disclosure further provide a device for terminating WLAN sensing measurement setup, which is performed by a sensing initiator, and the device includes:
a termination frame determination module, configured to determine a sensing measurement setup termination frame, in which the sensing measurement setup termination frame includes a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
a termination frame transmission module, configured to transmit the sensing measurement setup termination frame.

In another aspect, embodiments of the present disclosure further provide a device for terminating WLAN sensing measurement setup, which is performed by a sensing responder, and the device includes:
a termination frame reception module, configured to receive a sensing measurement setup termination frame, in which the sensing measurement setup termination frame includes a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
a sensing termination module, configured to terminate the sensing measurement process based on the sensing measurement setup termination frame.

Embodiments of the present disclosure further provide an electronic device, including a memory, a processor, and a computer program stored in the memory and executable by the processor, and the processor, when executing the program, performs one or more methods described in the embodiments of the present disclosure.

Embodiments of the present disclosure further provide a computer readable storage medium, on which a computer program is stored. When the computer program is executed by a processor, one or more methods described in the embodiments of the present disclosure are implemented.

In embodiments of the present disclosure, the sensing measurement setup termination frame is determined and transmitted; the sensing measurement setup termination frame includes the first identification bit and/or the second identification bit, the first identification bit indicates the termination range of the sensing measurement process to be terminated at a request of the sensing initiator, and the second identification bit indicates the trigger type of the sensing measurement process to be terminated at the request of the sensing initiator. A format of a termination message frame in the sensing measurement setup process is provided according to embodiments of the present disclosure, to realize the termination of the sensing measurement setup process.

Additional aspects and advantages of the embodiments of the present disclosure will be partially provided in the description in the following, which will become apparent from the description in the following, or will be learned through the practice of the present disclosure.

### BRIEF DESCRIPTION OF THE DRAWINGS

To better clarify technical solutions of embodiments of the present disclosure, drawings used in descriptions of the embodiments of the present disclosure are briefly introduced hereinafter. Apparently, the described drawings merely illustrate some embodiments of the present disclosure. A person ordinary skilled in the art can obtain other drawings based on these drawings without any creative efforts.
FIG. 1 is a first flow chart of a method for terminating WLAN sensing measurement setup according to an embodiment of the present disclosure.
FIG. 2 is a first schematic diagram of a first example according to an embodiment of the present disclosure.
FIG. 3 is a second schematic diagram of the first example according to an embodiment of the present disclosure.
FIG. 4 is a third schematic diagram of the first example according to an embodiment of the present disclosure.
FIG. 5 is a second flow chart of a method for terminating WLAN sensing measurement setup according to an embodiment of the present disclosure.
FIG. 6 is a schematic diagram of a second example according to an embodiment of the present disclosure.
FIG. 7 is a third flow chart of a method for terminating WLAN sensing measurement setup according to an embodiment of the present disclosure.
FIG. 8 is a first structural diagram of an electronic device according to an embodiment of the present disclosure.
FIG. 9 is a second structural diagram of an electronic device according to an embodiment of the present disclosure.
FIG. 10 is a third structural diagram of an electronic device according to an embodiment of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between an associated object in front of it and an associated object behind it.

The term "multiple" in the embodiments of the present disclosure refers to two or more than two, and other words for expressing quantities are similar to it.

Exemplary embodiments will be described in detail hereinafter, examples of which are illustrated in the drawings. When the drawings are referred to in the following description, unless otherwise indicated, same numerals in different drawings represent same or similar elements. The implementations described in the following exemplary embodiments do not represent all implementations consistent with the present invention. Rather, they are merely examples of devices and methods consistent with some aspects of the present invention as recited in the appended claims.

The terms used in the present disclosure are for the purpose of describing particular embodiments only and are not intended to limit the present disclosure. The singular forms "a", "the" and "said" used in the present disclosure and the appended claims are intended to include the plural forms as well, unless otherwise indicated in the context clearly. It should also be understood that the term "and/or" used herein refers to the fact that any or all possible combinations of one or more of the associated listed items may be included.

It should be understood that although the terms "first", "second", "third", etc., may be used in the present disclosure to describe various pieces of information, such information should not be limited to these terms. These terms are used only to distinguish pieces of information that are of the same type. For example, without departing from the scope of the present disclosure, first information may also be referred to as second information, and similarly, second information may also be referred to as first information. Depending on the context, for example, the word "if" used herein may be interpreted as "in a case that" or "when" or "in response to determining".

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

The embodiments of the present disclosure provide a method and device for terminating WLAN sensing measurement setup, an electronic device, and a storage medium, to provide a format of a termination message frame in a sensing measurement setup process.

Methods and devices are based on the same application concept. Since the principles of solving problems in methods and devices are similar, reference can be made to each other for implementations of the devices and the methods, the repetition of which is not further provided herein.

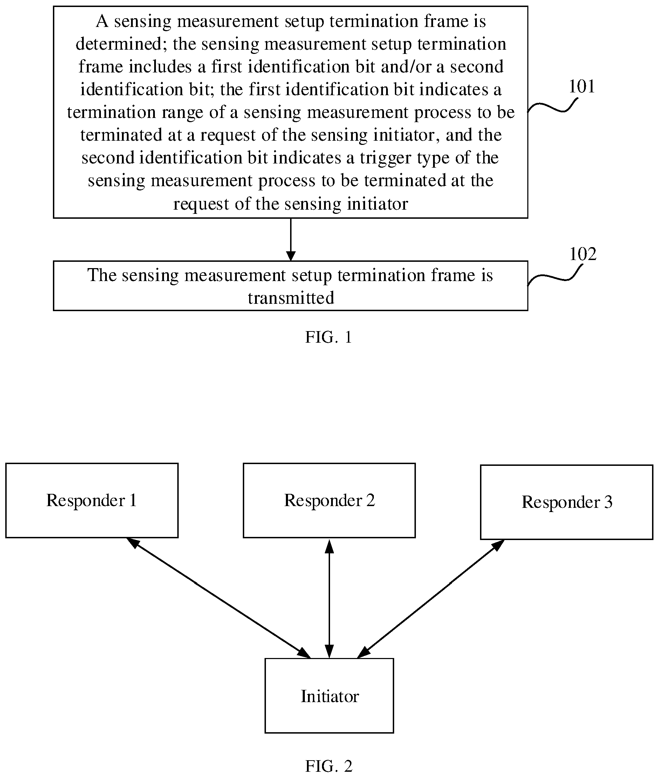

As shown in FIG. 1, an embodiment of the present disclosure provides a method for terminating WLAN sensing measurement setup. Optionally, the method may be applied to a network device, the network device is a sensing initiator, and the method may include the following steps.

Step 101, a sensing measurement setup termination frame is determined. The sensing measurement setup termination frame includes a first identification bit and/or a second identification bit; the first identification bit indicates a termination range of a sensing measurement process to be terminated at a request of the sensing initiator; and the second identification bit indicates a trigger type of the sensing measurement process to be terminated at the request of the sensing initiator.

As a first example, reference is made to FIG. 2 to FIG. 4. A WLAN sensing architecture and a WLAN sensing process to which the method for terminating WLAN sensing measurement setup according to embodiments of the present disclosure is applied are first introduced.

FIG. 2 is a schematic diagram of an architecture of a WLAN sensing (process). A sensing initiator (or initiator) initiates WLAN sensing (for example, initiates a WLAN sensing session), and there may be multiple sensing responders (or sensing receivers) or responders responding thereto, such as responder 1, responder 2, and responder 3 shown in FIG. 2. When the sensing initiator initiates the WLAN sensing, multiple associated or unassociated sensing responders of the WLAN sensing may respond.

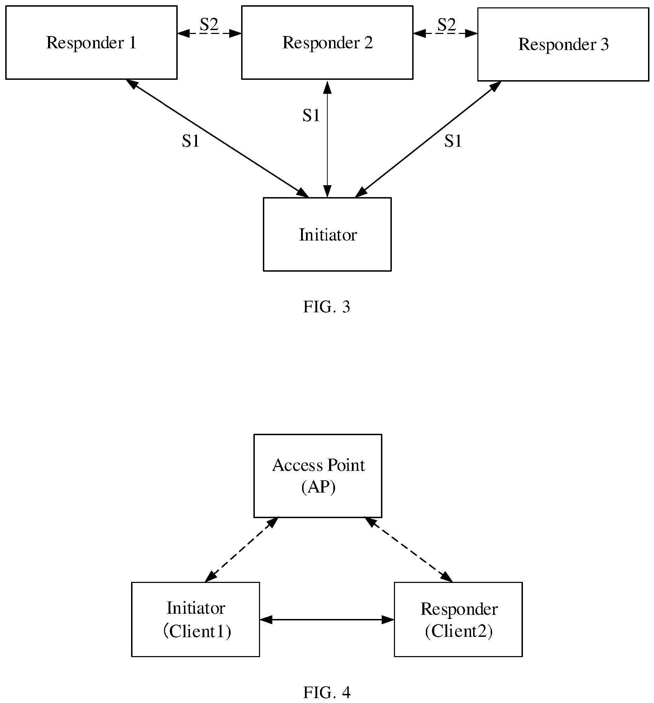

Reference is made to FIG. 3, the sensing initiator communicates with the sensing responder via a communication connection, as shown by communication connection S1; the sensing responders communicate with each other via communication connection S2.

Each sensing initiator may be a client (Client); each sensing responder (in this example, sensing responder 1 to sensing responder 3) may be a station (STA) or an access point (AP). In addition, the STA and the AP may assume multiple roles in the WLAN sensing process; for example, in the WLAN sensing process, STA may also serve as a sensing initiator, and the sensing initiator may be a sensing transmitter, a sensing receiver, or both, or neither. In the WLAN sensing process, the sensing responder may also be a sensing transmitter, a sensing receiver, or both.

As another architecture, as shown in FIG4, the sensing initiator and the sensing responder may both be clients, and they may communicate with each other through connections to the same access point (AP); in FIG. 4, Client1 is the sensing initiator, and Client2 is the sensing responder.

In the WLAN sensing measurement process, the sensing initiator determines the sensing measurement setup termination frame to terminate the WLAN sensing measurement process. The sensing measurement setup termination frame includes a first identification bit and/or a second identification bit; the first identification bit indicates the termination range of the sensing measurement process requested to be terminated by the sensing initiator. The termination range is, for example, full termination or partial termination. The full termination means terminating all sensing measurement processes established between the sensing initiator and one sensing responder, and the partial termination means terminating one or more of all sensing measurement processes established between the sensing initiator and one sensing responder. For example, in a case that the first identification bit is "1", it indicates terminating all sensing measurement processes established between the sensing initiator and the sensing responder; in a case that the first identification bit is "0", it indicates terminating part of sensing measurement processes established between the sensing initiator and the sensing responder.

The second identification bit indicates the trigger type of the sensing measurement process that the sensing initiator requests to terminate; the trigger type is, for example, a trigger type which is a triggered based (TB) type and a trigger type which is a non-triggered based (non-TB) type. Specifically, the TB type means that the AP is the initiator or transmitter, and the Non-TB type means that the STA is the initiator or transmitter. For example, in a case that the second identification bit is "1", it indicates terminating a TB sensing measurement process established between the sensing initiator and the sensing responder; in a case that the second identification bit is "0", it indicates terminating a Non-TB sensing measurement process established between the sensing initiator and the sensing responder.

Optionally, the first identification bit is carried in a Dialog Token field or a measurement setup ID (MSID) information field of the sensing measurement setup termination frame; and the second identification bit is included in the MSID information field.

Step 102: the sensing measurement setup termination frame is transmitted.

After the sensing measurement setup termination frame is determined, the sensing measurement setup termination frame is transmitted to the sensing responder, to terminate the sensing measurement setup process and improve the WLAN sensing measurement process.

In embodiments of the present disclosure, the sensing measurement setup termination frame is determined and transmitted; the sensing measurement setup termination frame includes the first identification bit and/or the second identification bit, the first identification bit indicates the termination range of the sensing measurement process to be terminated at the request of the sensing initiator, and the second identification bit indicates the trigger type of the sensing measurement process to be terminated at the request of the sensing initiator. A format of a termination message frame in the sensing measurement setup process is provided according to embodiments of the present disclosure, to realize the termination of the sensing measurement setup process.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit; the first identification bit indicates a termination range of a sensing measurement process requested to be terminated by the sensing initiator.

In a case that the sensing measurement setup termination frame includes the first identification bit and the first identification bit is set to a first parameter value, the termination range includes terminating all sensing measurement setup processes. The sensing measurement setup termination frame does not include measurement setup identities MSID corresponding to the all sensing measurement setup processes.

A case where the first identification bit is carried in a Dialog Token field of the sensing measurement setup termination frame is taken as an example, and a format of the sensing measurement setup termination frame is shown in the following Table 1.

**Table 1:**

| | | |
|---|---|---|
| Category | Pubic Action | Dialog Token |

The first identification bit is carried in the Dialog Token field, and the Dialog Token field is set to a first parameter value. For example, the first parameter value is 1, indicating that the sensing initiator that transmits the sensing measurement setup termination frame terminates all sensing measurement processes established between it and the sensing responder. The sensing measurement setup termination frame does not include MSIDs corresponding to the all sensing measurement setup processes, so as to avoid excessive design situations where a length of the sensing measurement setup termination frame is uncertain or the MSIDs are excessively set in the sensing measurement setup termination frame; specifically, the excessive setting represents, for example, a fact that: within a certain period of time, there may not be a situation where multiple sensing measurement processes are to be terminated at the same time, but MSIDs of multiple sensing measurement processes are configured in the sensing measurement setup termination frame.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit; the first identification bit indicates a termination range of a sensing measurement process requested to be terminated by the sensing initiator.

In a case that the sensing measurement setup termination frame includes the first identification bit and the first identification bit is set to a first parameter value, the termination range includes terminating all sensing measurement setup processes.

A case where the first identification bit is carried in an MSID information field of the sensing measurement setup termination frame is taken as an example, and a format of the sensing measurement setup termination frame is shown in the following Table 2.

**Table 2:**

| | | | | | |
|---|---|---|---|---|---|
| Category | Pubic Action | Dialog Token | MSID Information | | |
| | | | B1 | B2 (reserved) | ...... |

The first identification bit is shown as B1 bit in Table 2, and the B1 bit is set to the first parameter value. For example, the first parameter value is 1, indicating that the sensing initiator that transmits the sensing measurement setup termination frame terminates all sensing measurement processes established between it and the sensing responder.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit; the first identification bit indicates a termination range of a sensing measurement process requested to be terminated by the sensing initiator.

In a case that the sensing measurement setup termination frame includes the first identification bit and the first identification bit is set to a second parameter value, the termination range includes terminating one sensing measurement setup process; the sensing measurement setup termination frame includes an MSID corresponding to the one sensing measurement setup process.

Specifically, in a case that the first identification bit is set to the second parameter value, the terminating the one sensing measurement setup process includes terminating a sensing measurement setup process with a trigger type being a triggered based (TB) type. A case where the first identification bit is carried in a Dialog Token field of the sensing measurement setup termination frame is taken as an example, and a format of the sensing measurement setup termination frame is shown in the following Table 3.

**Table 3:**

| | | | |
|---|---|---|---|
| Category | Pubic Action | Dialog Token | MSID |

The first identification bit is carried in the Dialog Token field, and the Dialog Token field is set to the second parameter value, indicating that the sensing initiator that transmits the sensing measurement setup termination frame terminates a sensing measurement setup process with a trigger type being a triggered based (TB) type; and as shown in Table 3, only an MSID corresponding to one sensing measurement setup process is included in the sensing measurement setup termination frame, which avoids an excessive setting case that a length of the sensing measurement setup termination frame is uncertain, or, an excessive setting case that: within a certain period of time, there may not be a situation where multiple sensing measurement processes are to be terminated at the same time, but multiple MSIDs are configured in the sensing measurement setup termination frame.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit; the first identification bit indicates a termination range of a sensing measurement process requested to be terminated by the sensing initiator.

In a case that the sensing measurement setup termination frame includes the first identification bit and the first identification bit is set to a third parameter value, the termination range includes terminating one sensing measurement setup process; the sensing measurement setup termination frame includes an MSID corresponding to the one sensing measurement setup process.

Specifically, in a case that the first identification bit is set to the third parameter value, the terminating the one sensing measurement setup process includes terminating a sensing measurement setup process with a trigger type being a non-triggered based (non-TB) type; as shown in the above Table 3, the Dialog Token field is set to the second parameter value, indicating that the sensing initiator that transmits the sensing measurement setup termination frame terminates a sensing measurement setup process with a trigger type being a triggered based (TB) type; and as shown in Table 3, only an MSID corresponding to one sensing measurement setup process is included in the sensing measurement setup termination frame, which avoids excessive design situations where a length of the sensing measurement setup termination frame is uncertain or the MSIDs are excessively set in the sensing measurement setup termination frame.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit and a second identification bit, the first identification bit indicates a termination range of a sensing measurement process requested to be terminated by the sensing initiator, and the second identification bit indicates a trigger type of the sensing measurement process requested to be terminated by the sensing initiator.

In a case that the first identification bit is set to a fourth parameter value, and if the second identification bit is set to a fifth parameter value, the second identification bit indicates terminating one sensing measurement setup process with a trigger type being a TB type; the sensing measurement setup termination frame includes a measurement setup identity MSID corresponding to the one sensing measurement setup process.

A case where the first identification bit is carried in an MSID information field of the sensing measurement setup termination frame is taken as an example, and a format of the sensing measurement setup termination frame is shown in the following Table 4.

**Table 4:**

| | | | | | | |
|---|---|---|---|---|---|---|
| Category | Pubic Action | Dialog Token | MSID Information | | | MSID |
| | | | B1 (reserved) | B2 | ...... | |

The first identification bit is B1, and the second identification bit is B2. If the second identification bit is set to the fifth parameter value, the second identification bit indicates terminating one sensing measurement setup process with a trigger type being a TB type; only one MSID is included in the frame. For example, when B1 is set to a reserved bit and B2 is set to 1, it is indicated that established TB sensing measurement setup corresponding to the MSID is included.

It should be noted that the value of Dialog Token may be set to the same value or may be set to a different value.

Embodiments of the present disclosure provide a method for terminating WLAN sensing measurement setup; optionally, the method may be applied to a network device, the network device is a sensing initiator, and the method may include the following step.

A sensing measurement setup termination frame is determined; the sensing measurement setup termination frame includes a first identification bit and a second identification bit, the first identification bit indicates a termination range of a sensing measurement process requested to be terminated by the sensing initiator, and the second identification bit indicates a trigger type of the sensing measurement process requested to be terminated by the sensing initiator.

In a case that the first identification bit is set to a fourth parameter value, and if the second identification bit is set to a sixth parameter value, the second identification bit indicates terminating one sensing measurement setup process with a trigger type being a Non-TB type.

The sensing measurement setup termination frame includes a measurement setup identity MSID corresponding to the one sensing measurement setup process.

A case where the first identification bit is carried in an MSID information field of the sensing measurement setup termination frame is taken as an example, and a format of the sensing measurement setup termination frame is shown in the above Table 4. If the second identification bit is set to the sixth parameter value, the second identification bit indicates terminating one sensing measurement setup process with a trigger type being a non-TB type. For example, when B2 is set to 0, it is indicated that established Non-TB sensing measurement setup corresponding to the MSID is included.

It should be noted that the value of Dialog Token may be set to the same value, or may be set to a different value.

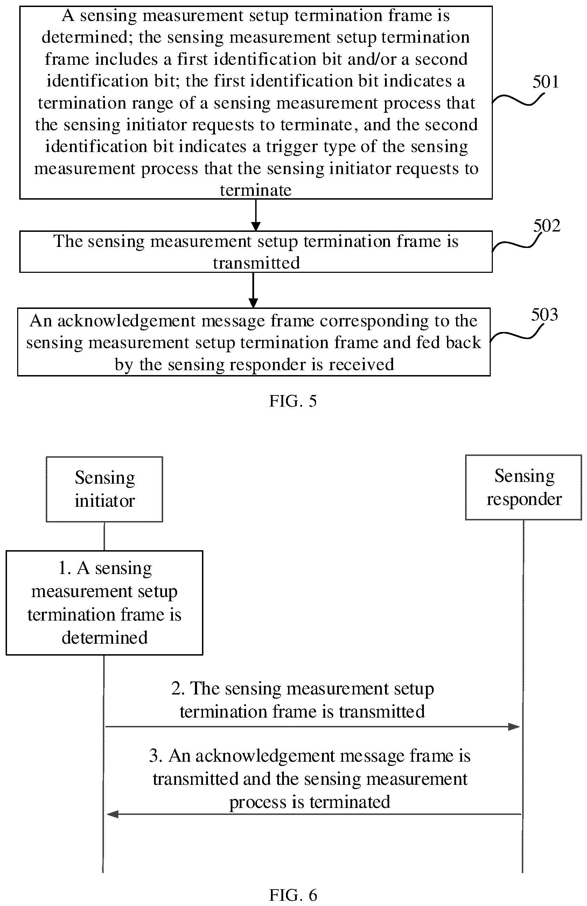

As shown in FIG. 5, an embodiment of the present disclosure provides a method for terminating WLAN sensing measurement setup; optionally, the method may be applied to a network device, the network device is a sensing initiator, and the method may include the following step.

Step 501, a sensing measurement setup termination frame is determined; the sensing measurement setup termination frame includes a first identification bit and/or a second identification bit; the first identification bit indicates a termination range of a sensing measurement process that the sensing initiator requests to terminate, and the second identification bit indicates a trigger type of the sensing measurement process that the sensing initiator requests to terminate.

As a second example, reference is made to FIG. 6, which shows another application scenario of a method for terminating WLAN sensing measurement setup according to an embodiment of the present disclosure. The sensing initiator performs the first step, i.e., determining a sensing measurement setup termination frame.

Step 502: the sensing measurement setup termination frame is transmitted.

As shown in FIG. 6, the sensing initiator performs the second step, i.e., transmitting the sensing measurement setup termination frame.

Step 503: an acknowledgement message frame corresponding to the sensing measurement setup termination frame and fed back by the sensing responder is received.

In combination with FIG. 6, the sensing responder performs the third step, i.e., transmitting an acknowledgement message frame to the sensing initiator and terminating the sensing measurement process.

After the sensing initiator transmits the sensing measurement setup termination frame, the sensing initiator further receives the acknowledgment message frame (ACK) corresponding to the sensing measurement setup termination frame and fed back by the sensing responder, to confirm that the sensing responder confirms termination of the sensing measurement process.

In embodiments of the present disclosure, the sensing measurement setup termination frame is determined and transmitted; the sensing measurement setup termination frame includes the first identification bit and/or the second identification bit, the first identification bit indicates the termination range of the sensing measurement process to be terminated at the request of the sensing initiator, and the second identification bit indicates the trigger type of the sensing measurement process to be terminated at the request of the sensing initiator. A format of a termination message frame in the sensing measurement setup process is provided according to embodiments of the present disclosure, to realize the termination of the sensing measurement setup process.

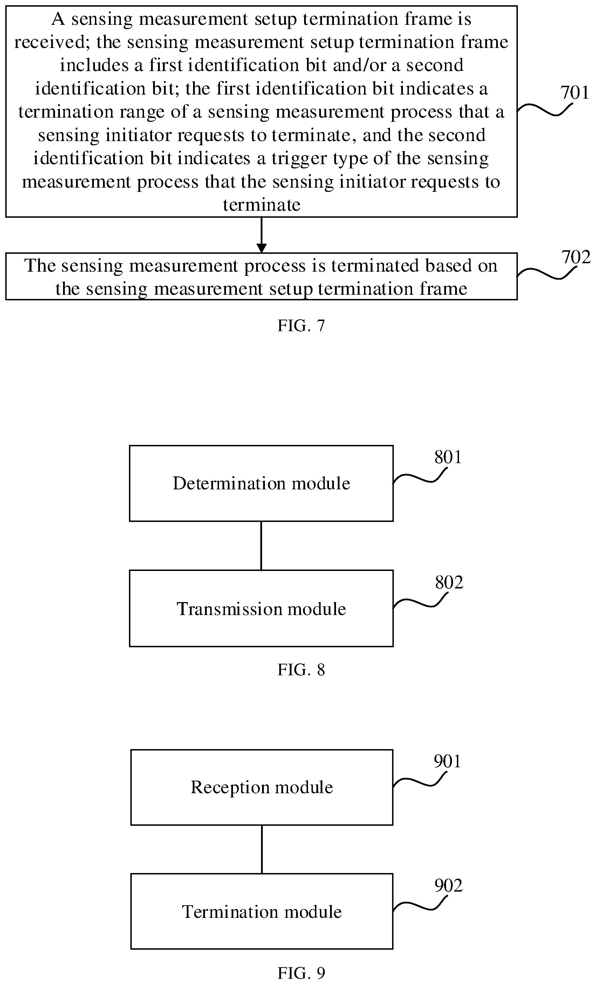

Reference is made to FIG. 7, an embodiment of the present disclosure provides a method for terminating WLAN sensing measurement setup. Optionally, the method may be applied to a network device, and the network device may be a sensing responder. The method may include the following steps.

Step 701, a sensing measurement setup termination frame is received; the sensing measurement setup termination frame includes a first identification bit and/or a second identification bit; the first identification bit indicates a termination range of a sensing measurement process that a sensing initiator requests to terminate, and the second identification bit indicates a trigger type of the sensing measurement process that the sensing initiator requests to terminate.

For the WLAN sensing architecture and the WLAN sensing process to which the communication method according to embodiments of the present disclosure is applied, reference may be made to the first example described above, which will not be further described herein.

In the WLAN sensing measurement process, the sensing responder receives the sensing measurement setup termination frame, to terminate the WLAN sensing measurement process. The sensing measurement setup termination frame includes a first identification bit and/or a second identification bit; the first identification bit indicates the termination range of the sensing measurement process requested to be terminated by the sensing initiator. The termination range is, for example, full termination or partial termination. The full termination means terminating all sensing measurement processes established between the sensing initiator and one sensing responder, and the partial termination means terminating one or more of all sensing measurement processes established between the sensing initiator and one sensing responder. For example, in a case that the first identification bit is "1", it indicates terminating all sensing measurement processes of the sensing initiator; in a case that the first identification bit is "0", it indicates terminating part of sensing measurement processes of the sensing initiator.

The second identification bit indicates the trigger type of the sensing measurement process that the sensing initiator requests to terminate; the trigger type is, for example, a trigger type which is triggered based (TB) type and a trigger type which is non-triggered based (non-TB) type. Specifically, the TB type means that the AP is the initiator or transmitter, and the Non-TB type means that the STA is the initiator or transmitter. For example, in a case that the second identification bit is "1", it indicates terminating a TB sensing measurement process of the sensing initiator; in a case that the second identification bit is "0", it indicates terminating a Non-TB sensing measurement process of the sensing initiator.

Optionally, the first identification bit is carried in a Dialog Token field or a measurement setup ID (MSID) information field of the sensing measurement setup termination frame; and the second identification bit is included in the MSID information field.

Step 702: the sensing measurement process is terminated based on the sensing measurement setup termination frame.

After the sensing measurement setup termination frame is received, the corresponding sensing measurement process is terminated based on the first identification bit and/or the second identification bit. For example, the first identification bit indicates full termination, and then the sensing responder terminates all sensing measurement processes established with the sensing initiator; or, the second identification bit indicates terminating a TB sensing measurement setup process, and then the sensing responder terminates all TB sensing measurement processes established with the sensing initiator.

In an optional embodiment, after the receiving the sensing measurement setup termination frame, the method further includes the following step.

An acknowledgement message frame corresponding to the sensing measurement setup termination frame is transmitted to the sensing initiator, in which the sensing responder feeds back the acknowledgement message frame (ACK) corresponding to the sensing measurement setup termination frame to the sensing initiator to confirm that the sensing responder confirms the termination of the sensing measurement process.

In embodiments of the present disclosure, the sensing measurement setup termination frame is received; and the sensing measurement process is terminated based on the sensing measurement setup termination frame. The sensing measurement setup termination frame includes the first identification bit and/or the second identification bit; the first identification bit indicates the termination range of the sensing measurement process that the sensing initiator requests to terminate, and the second identification bit indicates the trigger type of the sensing measurement process that the sensing initiator requests to terminate. A format of a termination message frame in the sensing measurement setup process is provided according to embodiments of the present disclosure, to realize the termination of the sensing measurement setup process.

Reference is made to FIG. 8, based on the same principle as the method according to the embodiments of the present disclosure, an embodiment of the present disclosure further provides an electronic device, the electronic device is a sensing initiator, and the electronic device includes a determination module 801 and a transmission module 802.

The determination module 801 is configured to determine a sensing measurement setup termination frame, the sensing measurement setup termination frame includes a first identification bit and/or a second identification bit, the first identification bit indicates a termination range of a sensing measurement process to be terminated at the request of the sensing initiator, and the second identification bit indicates a trigger type of the sensing measurement process to be terminated at a request of the sensing initiator.

The transmission module 802 is configured to transmit the sensing measurement setup termination frame.

Optionally, in embodiments of the present disclosure, in a case that the sensing measurement setup termination frame includes the first identification bit and the first identification bit is set to a first parameter value, the termination range includes terminating all sensing measurement setup processes.

The sensing measurement setup termination frame does not include measurement setup identities (MSID) corresponding to the all sensing measurement setup processes.

Optionally, in embodiments of the present disclosure, in a case that the sensing measurement setup termination frame includes the first identification bit and the first identification bit is set to a second parameter value or a third parameter value, the termination range includes terminating one sensing measurement setup process.

The sensing measurement setup termination frame includes an MSID corresponding to the one sensing measurement setup process.

Optionally, in embodiments of the present disclosure, in a case that the first identification bit is set to the second parameter value, the terminating the one sensing measurement setup process includes terminating a sensing measurement setup process with a trigger type being a triggered based (TB) type.

In a case that the first identification bit is set to the third parameter value, the terminating the one sensing measurement setup process includes terminating a sensing measurement setup process with a trigger type being a non-triggered based (non-TB) type.

Optionally, in embodiments of the present disclosure, in a case that the sensing measurement setup termination frame includes the first identification bit and the second identification bit, and the first identification bit is set to a fourth parameter value.

In a case that the second identification bit is set to a fifth parameter value, the second identification bit indicates terminating one sensing measurement setup process with a trigger type being a TB type.

In a case that the second identification bit is set to a sixth parameter value, the second identification bit indicates terminating one sensing measurement setup process with a trigger type being a non-TB type.

The sensing measurement setup termination frame includes a measurement setup identity (MSID) corresponding to the one sensing measurement setup process.

Optionally, in embodiments of the present disclosure, the first identification bit is carried in a dialogue token field or a measurement setup identity (MSID) information field of the sensing measurement setup termination frame, and the second identification bit is included in the MSID information field.

Optionally, in embodiments of the present disclosure, the electronic device further includes a message frame reception module.

The message frame reception module is configured to receive an acknowledgement message frame corresponding to the sensing measurement setup termination frame and fed back by a sensing responder, after the transmission module 802 transmits the sensing measurement setup termination frame.

In embodiments of the present disclosure, the determination module 801 determines the sensing measurement setup termination frame; the transmission module 802 transmits the sensing measurement setup termination frame; the sensing measurement setup termination frame includes the first identification bit and/or the second identification bit; the first identification bit indicates the termination range of the sensing measurement process that the sensing initiator requests to terminate, and the second identification bit indicates the trigger type of the sensing measurement process that the sensing initiator requests to terminate.

Embodiments of the present disclosure further provide a device for terminating WLAN sensing measurement setup, which is performed by a sensing initiator, and the device includes a termination frame determination module and a termination frame transmission module.

The termination frame determination module is configured to determine a sensing measurement setup termination frame, the sensing measurement setup termination frame includes a first identification bit and/or a second identification bit, the first identification bit indicates a termination range of a sensing measurement process to be terminated at the request of the sensing initiator, and the second identification bit indicates a trigger type of the sensing measurement process to be terminated at the request of the sensing initiator.

The termination frame transmission module is configured to transmit the sensing measurement setup termination frame.

The device further includes other modules of the electronic device in the embodiments described above, which will not be further described in detail herein.

Reference is made to FIG. 9, based on the same principle as the method according to the embodiments of the present disclosure, an embodiment of the present disclosure further provides an electronic device, the electronic device is a sensing responder, and the electronic device includes a reception module 901 and a termination module 902.

The reception module 901 is configured to receive a sensing measurement setup termination frame, the sensing measurement setup termination frame includes a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator.

The termination module 902 is configured to terminate the sensing measurement process based on the sensing measurement setup termination frame.

Optionally, in embodiments of the present disclosure, the electronic device further includes a message frame transmission module.

The message frame transmission module is configured to transmit an acknowledgement message frame corresponding to the sensing measurement setup termination frame to the sensing initiator, after the reception module 901 receives the sensing measurement setup termination frame.

In embodiments of the present disclosure, the reception module 901 receives the sensing measurement setup termination frame; and the termination module 902 terminates the sensing measurement process based on the sensing measurement setup termination frame. The sensing measurement setup termination frame includes the first identification bit and/or the second identification bit; the first identification bit indicates the termination range of the sensing measurement process that the sensing initiator requests to terminate, and the second identification bit indicates the trigger type of the sensing measurement process that the sensing initiator requests to terminate.

Embodiments of the present disclosure further provide a device for terminating WLAN sensing measurement setup, which is performed by a sensing responder, and the device includes a termination frame reception module and a sensing termination module.

The termination frame reception module is configured to receive a sensing measurement setup termination frame, the sensing measurement setup termination frame includes a first identification bit and/or a second identification bit, the first identification bit indicates a termination range of a sensing measurement process to be terminated at the request of a sensing initiator, and the second identification bit indicates a trigger type of the sensing measurement process to be terminated at the request of the sensing initiator.

The sensing termination module is configured to terminate the sensing measurement process based on the sensing measurement setup termination frame.

The device further includes other modules of the electronic device in the embodiments described above, which will not be further described in detail herein.

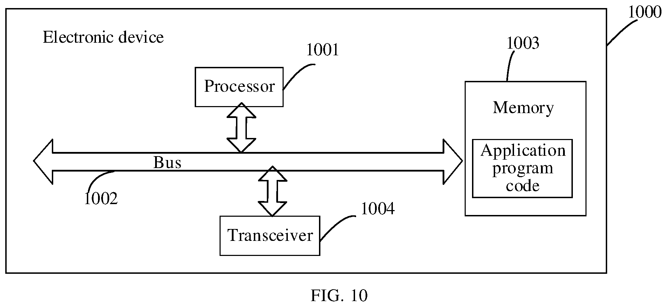

In an optional embodiment, an embodiment of the present disclosure further provides an electronic device, as shown in FIG. 10. The electronic device 1000 shown in FIG. 10 may be a server, including: a processor 1001 and a memory 1003. The processor 1001 and the memory 1003 are connected, for example, via a bus 1002. Optionally, the electronic device 1000 may further include a transceiver 1004. It should be noted that in actual applications, the quantity of the transceiver 1004 is not limited to one, and the structure of the electronic device 1000 does not constitute a limitation on the embodiments of the present disclosure.

The processor 1001 may be a CPU (Central Processing Unit), a general-purpose processor, a DSP (Digital Signal Processor), an ASIC (Application Specific Integrated Circuit), an FPGA (Field Programmable Gate Array) or other programmable logic devices, transistor logic devices, hardware components or any combination thereof. It may implement or execute various exemplary logical blocks, modules, and circuits described in conjunction with the contents of the present disclosure. Or, the processor 1001 may be a combination that implements computing functions, such as a combination including one or more microprocessors, a combination including a DSP and a microprocessor, etc.

The bus 1002 may include a pathway for transmitting information between the components described above. The bus 1002 may be a PCI (Peripheral Component Interconnect) bus or an EISA (Extended Industry Standard Architecture) bus, or the like. The bus 1002 may be divided into an address bus, a data bus, a control bus, or the like. For ease of representation, only one thick line is used for representation in FIG. 10, but this does not mean that there is only one bus or one type of bus.

The memory 1003 may be a ROM (Read Only Memory) or other types of static storage devices that can store static information and instructions, a RAM (Random Access Memory) or other types of dynamic storage devices that can store information and instructions, or may be an EEPROM (Electrically Erasable Programmable Read Only Memory), a CD-ROM (Compact Disc Read Only Memory), or other optical disc storage, optical disk storage (including a compressed optical disk, a laser disk, an optical disk, a digital versatile disk, a Blu-ray disk, etc.), a magnetic disk storage medium or other magnetic storage devices, or any other medium that can be used to carry or store desired program code in the form of instructions or data structures and accessible by a computer, which is not limited thereto.

The memory 1003 is configured to store application program code for perform the solution of the present disclosure, and the execution is controlled by the processor 1001. The processor 1001 is configured to execute the application program code stored in the memory 1003 to implement the contents shown in the method embodiments described above.

The electronic device includes but is not limited to: a mobile terminal such as a mobile phone, a laptop, a digital broadcast receiver, a PDA (personal digital assistant), a PAD (tablet computer), a PMP (portable multimedia player), a vehicle-mounted terminal (such as a vehicle-mounted navigation terminal), etc., and a fixed terminal such as a digital TV, a desktop computer, etc. The electronic device shown in FIG. 10 is merely an example and should not limit the functions and scope of use of the embodiments of the present disclosure.

The server according to the present disclosure may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN, as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present disclosure.

Embodiments of the present disclosure provide a computer readable storage medium, on which a computer program is stored. The computer program, when being executed on a computer, causes the computer to perform the corresponding contents of the method embodiments described above.

It should be understood that, although steps in the flow chart of the drawings are displayed sequentially as indicated by arrows, these steps are not necessarily executed sequentially in the order indicated by the arrows. Unless otherwise specified herein, there is no strict limitation on the order of execution of these steps and they may be executed in other orders. Moreover, at least some of the steps in the flow chart of the drawings may each include multiple sub-steps or multiple stages. These sub-steps or stages are not necessarily completed at the same time and may be executed at different times, their execution order is not necessarily sequential, and they may be executed in turn or alternately with at least some of other steps or sub-steps or stages of other steps.

It should be noted that the computer readable medium described above in the present disclosure may be a computer readable signal medium or a computer readable storage medium or any combination of the two. A computer readable storage medium may be, but not limited to, an electronic, magnetic, optical, electromagnetic, infrared, or semiconductor system, apparatus, or device, or any combination of the above, etc. More specific examples of the computer readable storage medium may include, but not limited to, an electrical connection having one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer readable storage medium may be any tangible medium that can contain or store a program, and the program may be used by or in connection with an instruction execution system, apparatus, or device. In the present disclosure, the computer readable signal medium may include a data signal propagated in a baseband or as a part of a carrier wave, in which a computer readable program code is carried. Such a propagated data signal may take a variety of forms, including but not limited to an electromagnetic signal, an optical signal, or any suitable combination of the above. Or, the computer readable signal medium may be any computer readable medium other than computer readable storage medium, the computer readable signal medium can transmit, propagate, or transport a program, and the program may be used by or in connection with an instruction execution system, apparatus, or device. The program code contained on the computer readable medium may be transmitted using any appropriate medium, including but not limited to: a wire, an optical cable, an RF (radio frequency), etc., or any suitable combination of the above.

The computer readable medium may be included in the electronic device, or may exist independently without being installed in the electronic device.

The computer readable medium carries one or more programs. When the one or more programs are executed by the electronic device, the electronic device is caused to perform the method in the above embodiments.

According to an aspect of the present disclosure, a computer program product or a computer program is provided. The computer program product or the computer program includes computer instructions stored in a computer readable storage medium. A processor of a computer device reads the computer instructions from the computer readable storage medium, and the processor executes the computer instructions to cause the computer device to perform the method according to the above various optional implementations.

Computer program code for performing operations of the present disclosure may be written in one or more programming languages, or a combination thereof, and the one or more programming languages include object-oriented programming languages such as Java, Smalltalk, C++, and conventional procedural programming languages such as "C" language or similar programming languages. The program code may be executed entirely on a computer of the user, partly on the computer of the user, as a stand-alone software package, partly on the computer of the user and partly on a remote computer, or, entirely on a remote computer or server. In cases involving a remote computer, the remote computer may be connected to the computer of the user through any type of network, including a local area network (LAN) or a wide area network (WAN), or may be connected to an external computer (e.g., connected through the Internet from an Internet service provider).

The flow charts and block diagrams in the drawings illustrate possible architectures, functions, and operations of implementations of systems, methods, and computer program products according to various embodiments of the present disclosure. In this regard, each block in the flow charts or block diagrams may represent a module, a program segment, or a portion of code, and the module, the program segment, or the portion of code contains one or more executable instructions for implementing the specified logical functions. It should also be noted that, in some alternative implementations, the functions noted in the blocks may occur in an order different from that noted in the drawings. For example, two blocks shown in succession may actually be executed substantially in parallel, or they may sometimes be executed in the reverse order, depending on the functionality involved. It should also be noted that each block in the block diagrams and/or flow charts, and combinations of blocks in the block diagrams and/or flow charts, may be implemented using a dedicated hardware-based system that performs the specified functions or operations, or may be implemented using a combination of dedicated hardware and computer instructions.

The modules involved in the embodiments described in the present disclosure may be implemented by software or by hardware. The name of a module does not constitute a limitation on the module itself in some cases. For example, module A can also be described as "module A for performing operation B".

The above description merely illustrates preferred embodiments of the present disclosure and explains the technical principles used. Those skilled in the art should understand that the disclosed scope involved in the present disclosure is not limited to the technical solutions formed by specific combinations of the technical features described above, but should also cover other technical solutions formed by any combination of the technical features described above or their equivalent features without departing from the disclosed concepts described above, for example, technical solutions formed by mutually replacing the features described above with technical features disclosed in the present disclosure (but not limited thereto) that have similar functions.

## Claims

1. A method for terminating wireless local area network (WLAN) sensing measurement setup, performed by a sensing initiator, comprising:
determining a sensing measurement setup termination frame, wherein the sensing measurement setup termination frame comprises a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
transmitting the sensing measurement setup termination frame.

2. The method according to claim 1, wherein
in a case that the sensing measurement setup termination frame comprises the first identification bit and the first identification bit is set to a first parameter value, the termination range comprises terminating all sensing measurement setup processes;
wherein the sensing measurement setup termination frame does not comprise measurement setup identities (MSIDs) corresponding to the all sensing measurement setup processes.

3. The method according to claim 1, wherein in a case that the sensing measurement setup termination frame comprises the first identification bit and the first identification bit is set to a second parameter value or a third parameter value, the termination range comprises terminating one sensing measurement setup process;
wherein the sensing measurement setup termination frame comprises an MSID corresponding to the one sensing measurement setup process.

4. The method according to claim 3, wherein in a case that the first identification bit is set to the second parameter value, the terminating the one sensing measurement setup process comprises terminating a sensing measurement setup process with a trigger type being a triggered based (TB) type; and
in a case that the first identification bit is set to the third parameter value, the terminating the one sensing measurement setup process comprises terminating a sensing measurement setup process with a trigger type being a non-triggered based (non-TB) type.

5. The method according to claim 1, wherein
in a case that the sensing measurement setup termination frame comprises the first identification bit and the second identification bit, and the first identification bit is set to a fourth parameter value:
in a case that the second identification bit is set to a fifth parameter value, the second identification bit indicates terminating one sensing measurement setup process with a trigger type being a TB type; and
in a case that the second identification bit is set to a sixth parameter value, the second identification bit indicates terminating one sensing measurement setup process with a trigger type being a non-TB type;
wherein the sensing measurement setup termination frame comprises a measurement setup identity (MSID) corresponding to the one sensing measurement setup process.

6. The method according to any one of claim 1, claim 4 or claim 5, wherein the first identification bit is carried in a dialogue token field or a measurement setup identity (MSID) information field of the sensing measurement setup termination frame, and the second identification bit is comprised in the MSID information field.

7. The method according to claim 1, wherein after the transmitting the sensing measurement setup termination frame, the method further comprises:
receiving an acknowledgement message frame corresponding to the sensing measurement setup termination frame and fed back by a sensing responder.

8. A method for terminating wireless local area network (WLAN) sensing measurement setup, performed by a sensing responder, comprising:
receiving a sensing measurement setup termination frame, wherein the sensing measurement setup termination frame comprises a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
terminating the sensing measurement process based on the sensing measurement setup termination frame.

9. The method according to claim 8, wherein after the receiving the sensing measurement setup termination frame, the method further comprises:
transmitting an acknowledgement message frame corresponding to the sensing measurement setup termination frame to the sensing initiator.

10. An electronic device, wherein the electronic device is a sensing initiator, and the electronic device comprises:
a determination module, configured to determine a sensing measurement setup termination frame, wherein the sensing measurement setup termination frame comprises a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
a transmission module, configured to transmit the sensing measurement setup termination frame.

11. An electronic device, wherein the electronic device is a sensing responder, and the electronic device comprises:
a reception module, configured to receive a sensing measurement setup termination frame, wherein the sensing measurement setup termination frame comprises a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
a termination module, configured to terminate the sensing measurement process based on the sensing measurement setup termination frame.

12. A device for terminating wireless local area network (WLAN) sensing measurement setup, applied to a sensing initiator, comprising:
a termination frame determination module, configured to determine a sensing measurement setup termination frame, wherein the sensing measurement setup termination frame comprises a first identification bit and/or a second identification bit, the first identification bit indicates a termination range of a sensing measurement process to be terminated at a request of the sensing initiator, and the second identification bit indicates a trigger type of the sensing measurement process to be terminated at the request of the sensing initiator; and
a termination frame transmission module, configured to transmit the sensing measurement setup termination frame.

13. A device for terminating wireless local area network (WLAN) sensing measurement setup, applied to a sensing responder, comprising:
a termination frame reception module, configured to receive a sensing measurement setup termination frame, wherein the sensing measurement setup termination frame comprises a first identification bit and/or a second identification bit, the first identification bit indicates a termination range of a sensing measurement process to be terminated at the request of a sensing initiator, and the second identification bit indicates a trigger type of the sensing measurement process to be terminated at a request of the sensing initiator; and
a sensing termination module, configured to terminate the sensing measurement process based on the sensing measurement setup termination frame.

14. An electronic device, comprising a memory, a processor, and a computer program stored in the memory and executable by the processor, wherein the processor, when executing the program, performs the method according to any one of claims 1 to 7 or any one of claims 8 to 9.

15. A computer readable storage medium, wherein a computer program is stored on the computer readable storage medium, and when the computer program is executed by a processor, the method according to any one of claims 1 to 7 or any one of 8 to 9 is performed.,
